# DEMANDE DE BREVET EUROPEEN

(11) **EP 4 660 059 A1**
(43) Date de publication de la demande: **10.12.2025**
(21) Numéro de dépôt: 25170924.2
(22) Date de dépôt: 16.04.2025
(51) Int. Cl.: B62D 25/04, B62D 29/00, B62D 25/02

(54) **VEHICULE AUTOMOBILE COMPRENANT UN PILIER DE PORTE EQUIPE D'UN INSERT GONFLANT DE SCELLAGE, ET PROCEDE DE FABRICATION D'UN TEL VEHICULE**

(30) Priorité: 04.06.2024 FR 2405830
(71) Demandeur: Stellantis Auto SAS, 78300 Poissy (FR)
(72) Inventeur: RIVIERE, LAURENT, 75015 PARIS (FR); LEFEVRE, ERIC, 91470 LIMOURS (FR); GUILBAUT, MARC, 94140 ALFORTVILLE (FR); PASCOA DOS SANTOS, MICHEL, 90000 BELFORT (FR)
(74) Mandataire: BCIP

(57) **Abrégé**

L'invention concerne un véhicule automobile comportant une caisse qui comprend une doublure custode (DC) reposant sur un longeron interne (LI) d'un côté interne, comprenant une patte d'agrafage (PA) retenant ladite doublure (DC), l'ensemble étant recouvert par une paroi d'habitacle externe, délimitant un espace supérieur et un espace inférieur en référence à l'axe vertical (Z), délimités par une doublure d'aile (DAR) arrière,
caractérisé en ce que la caisse comprend en outre un insert gonflant s'étendant dans des interstices entre la paroi d'habitacle et la doublure d'aile (DAR) d'un côté externe de l'espace supérieur, vers le longeron interne (LI) d'un côté interne de l'espace inférieur, de sorte à étanchéifier l'espace supérieur et l'espace inférieur en dessous de la patte d'agrafage (PA) en référence à l'axe vertical (Z).

L'invention concerne également un procédé de fabrication d'un tel véhicule.

## Description

L'invention se rapporte au domaine des tôleries et caisses de véhicules automobile, plus particulièrement de l'étanchéité de telles tôleries et caisses.

La fabrication de véhicules automobiles implique classiquement une mise en place de l'habitacle dans la caisse avec un anneau de renfort sur une base de la caisse du véhicule. Lors de la cette mise en place, il est nécessaire d'étanchéifier une zone de pilier de porte appelée bas de pied C où le pied repose sur une pièce de base équipée d'une patte d'agrafage. Dans l'art antérieur, l'étanchéité est classiquement réalisée au moyen d'un cordon de peinture du côté intérieur du véhicule. On notera aussi dans les solutions de la demanderesse, la présence d'un insert gonflant dans cette zone qui vient fermer le corps creux en partie basse de pied C, au-dessus de la patte d'agrafage.

Cette solution technique nécessite donc la pose d'un insert gonflant ainsi que la dépose d'un cordon peinture. Malheureusement, l'étanchéité de la partie avant du bas de pied C n'est pas satisfaisante car le cordon demande des jeux réduits entre les tôles, alors que dans cette zone, les contraintes de ferrage demandent plutôt à avoir un jeu le plus grand possible.

Un objectif de la présente invention est de proposer une solution plus facile et plus pratique pour étanchéifier le bas de pied C ainsi que la zone de la patte d'agrafage, afin de bloquer les remontées de bruits, poussière, eau, fumées (par exemple suite à un problème avec les batteries dans un véhicule électrique).

Pour atteindre cet objectif, l'invention propose un véhicule automobile dans un repère dans l'espace comprenant un axe avant-arrière suivant une direction de déplacement du véhicule ; un axe latéral perpendiculaire à l'axe avant-arrière, et un axe vertical perpendiculaire à l'axe avant-arrière et à l'axe latéral, le véhicule automobile comportant une caisse qui comprend une doublure custode reposant sur un longeron interne d'un côté interne en référence à l'axe latéral, le longeron interne comprenant une patte d'agrafage retenant la doublure custode sur le longeron interne, la doublure custode et le longeron interne étant recouverts par une paroi d'habitacle d'un côté externe en référence à l'axe latéral,
la doublure custode et la paroi d'habitacle délimitant un espace supérieur en référence à l'axe vertical,
le longeron interne et la paroi d'habitacle délimitant un espace inférieur en référence à l'axe vertical,
l'espace supérieur et l'espace inférieur étant délimités par une doublure d'aile d'un côté arrière en référence à l'axe avant-arrière,
caractérisé en ce que la caisse comprend en outre un insert gonflant s'étendant dans des interstices entre la paroi d'habitacle et la doublure d'aile d'un côté externe de l'espace supérieur en référence à l'axe latéral, vers le longeron interne d'un côté interne de l'espace inférieur en référence à l'axe latéral, de sorte à étanchéifier l'espace supérieur et l'espace inférieur en dessous de la patte d'agrafage en référence à l'axe vertical.

Avantageusement, l'invention propose un insert gonflant permettant de réaliser à la fois la fonction d'étanchéité du corps creux du pied C en partie basse mais aussi l'étanchéité au niveau de la patte d'agrafe du côté d'habitacle assemblé afin de se passer de la mise en place d'un cordon d'étanchéité peinture.

L'intérêt technique de cette solution est de simplifier le process de fabrication du véhicule en n'ayant pas à déposer de cordon peinture en bas de pied C au niveau de la patte d'agrafage, ce qui permet de simplifier la fabrication. De plus la gestion de contraintes antagonistes entre un jeu réduit pour la bonne étanchéité avec un cordon alors qu'il faut des jeux importants pour assurer le chargement ferrage n'est plus une problématique.

De préférence, la doublure d'aile comprend au moins un trou de fixation permettant de fixer l'insert gonflant.

De préférence, le véhicule automobile comprend un dispositif de fermeture de longeronnet comprend une surface fermant la patte d'agrafage d'un côté interne en référence à l'axe latéral.

Cela permet d'étanchéifier le pilier de porte du côté interne au niveau de la patte d'agrafage.

Préférentiellement, l'insert gonflant comprend un noyau non-extensible et une structure d'expansion extensible, et en ce que le volume de la structure d'expansion une fois étendue est supérieur au volume de l'espace supérieur, et à celui de l'espace inférieur.

Cela permet d'avoir un noyau rigide bien fixé dans l'espace supérieur et l'espace inférieur.

De préférence, le noyau non-extensible occupe les interstices entre la paroi d'habitacle et la doublure d'aile dans l'espace supérieur, et la partie externe du longeron interne dans l'espace inférieur.

Cela permet d'avoir une première étanchéité même sans gonflage de l'insert gonflable.

Un autre objet de l'invention concerne un procédé de fabrication d'un véhicule automobile selon l'invention, comprenant les étapes suivantes :
- une étape montage de la doublure custode sur le longeron interne au moyen de la patte d'agrafage ;
- une étape de fixation de l'insert gonflant dans l'espace supérieur et l'espace inférieur ;
- une étape de montage de la paroi d'habitacle d'un côté externe, et de la doublure d'aile d'un côté arrière,
- une étape de gonflage de l'insert gonflant de sorte qu'il s'étende dans les interstices entre la paroi d'habitacle et la doublure d'aile d'un côté externe de l'espace supérieur, vers le longeron interne d'un côté interne de l'espace inférieur, et qu'il étanchéifie l'espace supérieur et l'espace inférieur.

De préférence, l'étape de fixation comprend une fixation de l'insert gonflant dans ledit trou de fixation de la doublure d'aile.

Préférentiellement, le procédé de fabrication comprend en outre une étape de mise en place du dispositif de fermeture de longeronnet de sorte que la surface ferme la patte d'agrafage intérieurement.

De préférence, l'étape de fixation comprend une mise en place du noyau non-extensible de sorte qu'il occupe les interstices entre la paroi d'habitacle et la doublure d'aile dans l'espace supérieur, et la partie externe du longeron interne dans l'espace inférieur.

L'invention sera davantage détaillée par la description de modes de réalisation non limitatifs, et sur la base des figures annexées, dans lesquelles :
- [Fig. 1] illustre schématiquement une vue dans l'espace d'un côté interne de pilier de porte d'un véhicule automobile selon l'invention sans dispositif de fermeture de longeronnet ;
- [Fig. 2] illustre schématiquement une vue similaire à celle de la figure 1 avec un dispositif de fermeture de longeronnet ;

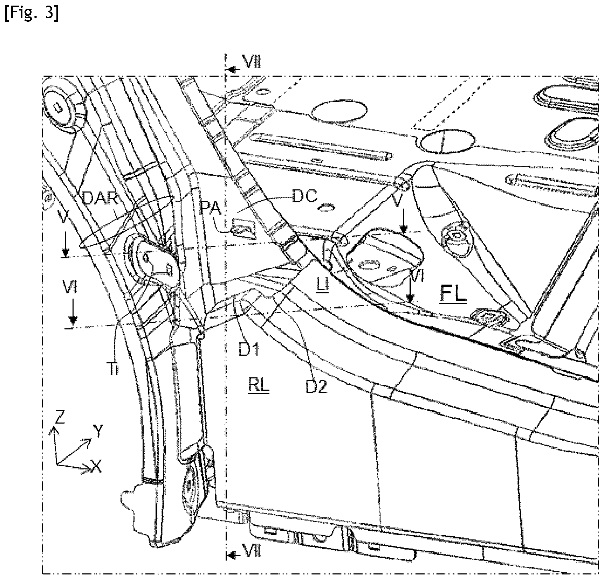

- [Fig. 3] illustre schématiquement une vue dans l'espace d'un côté externe de pilier de porte d'un véhicule automobile selon l'invention sans paroi d'habitacle ;
- [Fig. 4] illustre schématiquement une vue dans l'espace d'un renfort de longeron ;
- [Fig. 5] illustre schématiquement une vue en coupe selon V-V de la figure 3 ;
- [Fig. 6] illustre schématiquement une vue en coupe selon VI-VI de la figure 3 ;
- [Fig. 7] illustre schématiquement une vue en coupe selon VII-VII de la figure 3 ; et
- [Fig. 8] illustre schématiquement une vue en coupe selon un plan parallèle aux axes XY au niveau de l'axe de la coupe VII-VII de la figure 3.

La conception classique avec un insert gonflant en bas de pied C (pilier de porte) et un cordon d'étanchéité de peinture au niveau de la patte d'agrafage du côté d'habitacle assemblé.

La solution de l'art antérieur pour réaliser l'étanchéité du bas de pied C comprenait la mise en place d'un insert gonflant supérieur venant fermer le corps creux du pied C pour l'étanchéifier aux bruits, eau, et poussières ; et d'un cordon d'étanchéité de peinture permettant d'étanchéifier au niveau de la jonction entre la silhouette du pilier et la pièce de base (plateforme).

La présente invention a pour but de proposer une solution technique permet de réaliser cette double fonction avec un insert gonflant IG, et ne plus avoir à réaliser de dépose de cordon d'étanchéité peinture.

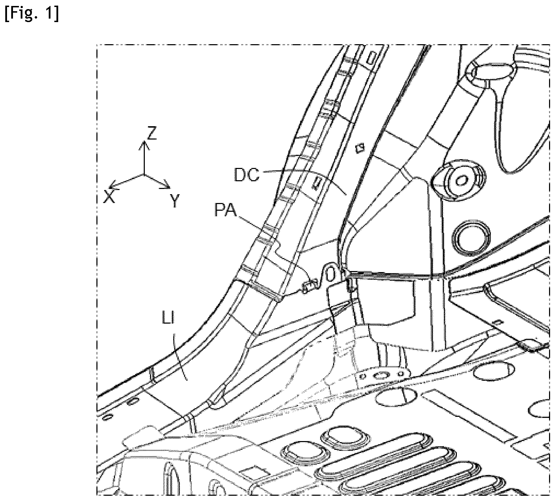

La figure 1 présente la conception côté intérieur du véhicule montrant le pilier et la pièce de base équipée de la patte d'agrafage PA qui permet de mettre en place le côté d'habitacle assemblé sur la plateforme durant le procédé de ferrage.

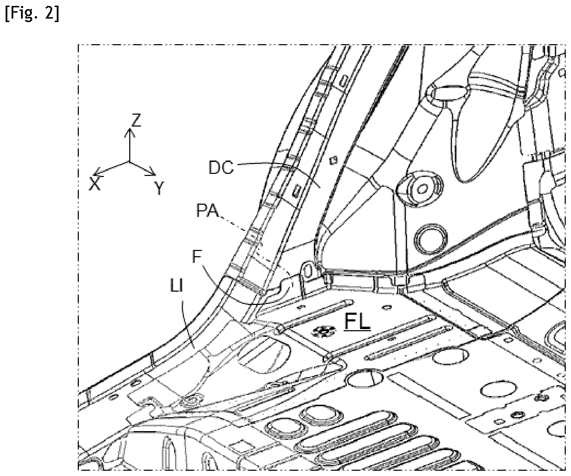

La caisse comprend :
- un dispositif de fermeture de longeronnet FL avant (illustré en figure 2) ;
- la patte agrafage PA ;
- l'insert gonflant IG ;
- une doublure custode inférieure DC ;
- un longeron interne LI ;
- un renfort de longeron RL ;
- une doublure d'aile DAR ;
- une paroi de côté d'habitacle CDH.

La doublure d'aile DAR arrière en sa partie avant comporte des trous Ti permettant d'y clipper l'insert gonflant IG.

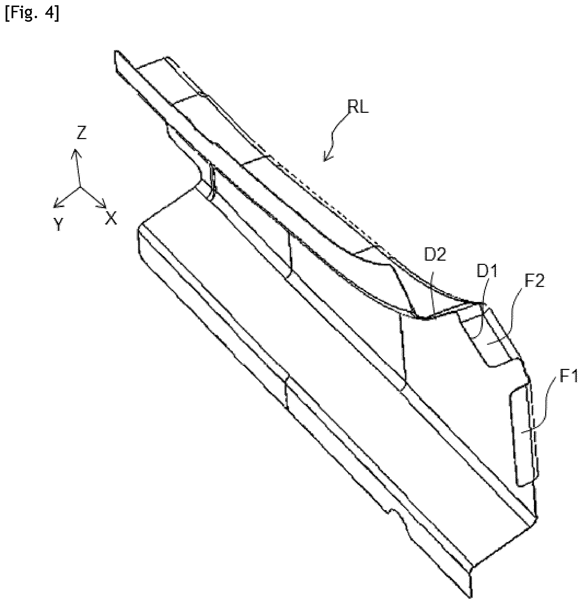

Le renfort de longeron RL arrière (faisant partie de la pièce de base) est illustré en détail en figure 4. Il possède une forme de carter dans la zone de coopération avec le pied C, qui est définie par :
- une première face verticale F1 qui permet de réaliser une fixation par points de soudure avec la doublure d'aile DAR ;
- une deuxième face oblique F2 en partie supérieure.

Une découpe du renfort de longeron RL, qui est en particulier décomposée en une première partie D1 sur la face supérieure (principalement dans un plan vertical (axes Y,Z) et une deuxième partie D2 qui est plutôt sur un plan oblique proche de l'horizontale (axes X,Y).

La découpe permet d'ouvrir l'espace entre le renfort de longeron RL et la doublure custode inférieure DC.

En utilisant les trous Ti de la doublure d'aile DAR et l'espacement réalisé grâce à la découpe D1, D2 sur le renfort de longeron RL, il est possible d'amener l'insert gonflant IG jusque sous la patte d'agrafage PA, et aussi de venir boucher le trou en X entre la doublure custode inférieure DC et le longeron interne LI. La zone de gonflement de l'insert gonflant IG est suivant l'interface entre le pilier et la pièce de base.

L'insert gonflant IG fixé sur la doublure d'aile DAR peut donc passer au-dessus de la deuxième face oblique F2, puis descendre pour s'étendre jusqu'à l'interface de gonflement en descendant en Z grâce à l'espacement.

L'étanchéité de l'insert gonflant IG est située sous la patte d'agrafage PA, et l'insert étanchéifie tout le recouvrement entre la doublure custode inférieure DC et le longeron interne LI que ce soit latéralement en Y ou à l'avant en X. Ainsi, il n'y a plus aucune nécessité de mettre un cordon d'étanchéité de peinture en intérieur caisse comme dans l'art antérieur car l'étanchéité est réalisée par l'insert gonflant IG qui fermera aussi tout le bas du corps creux du pied C.

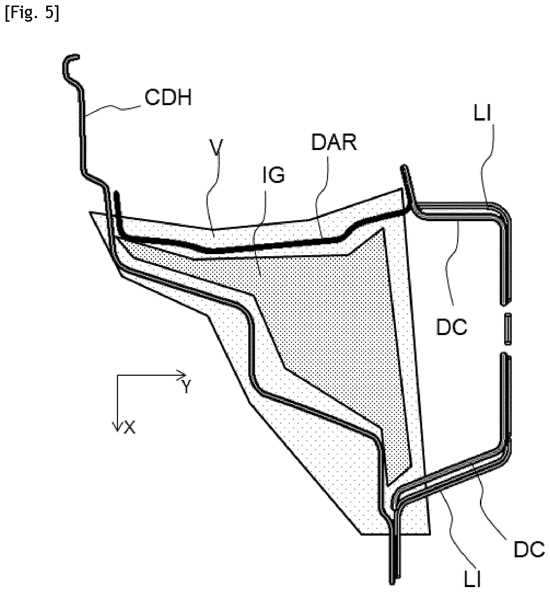

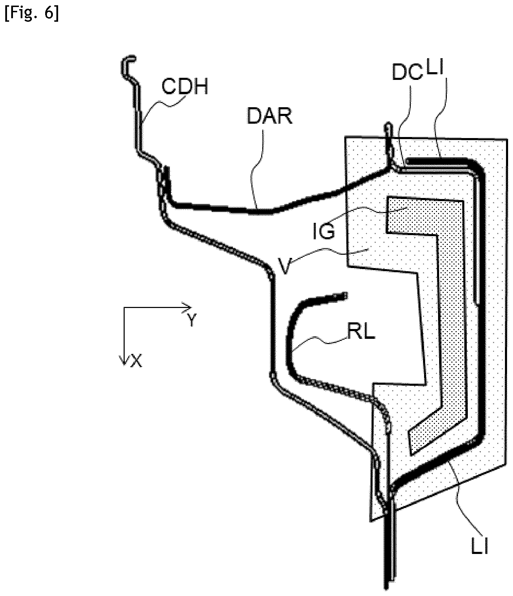

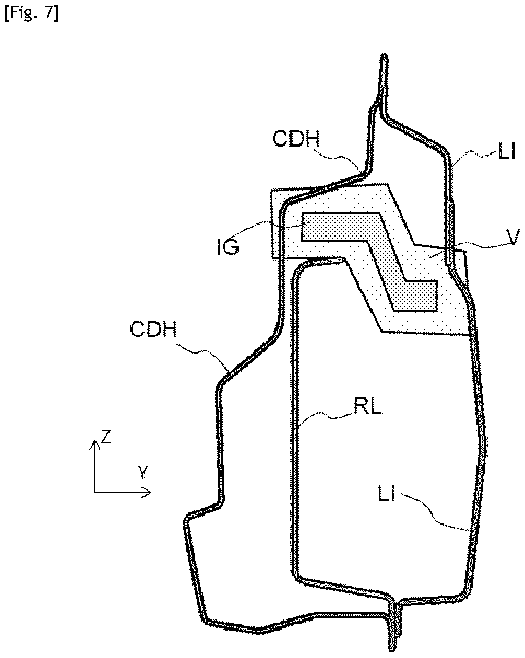

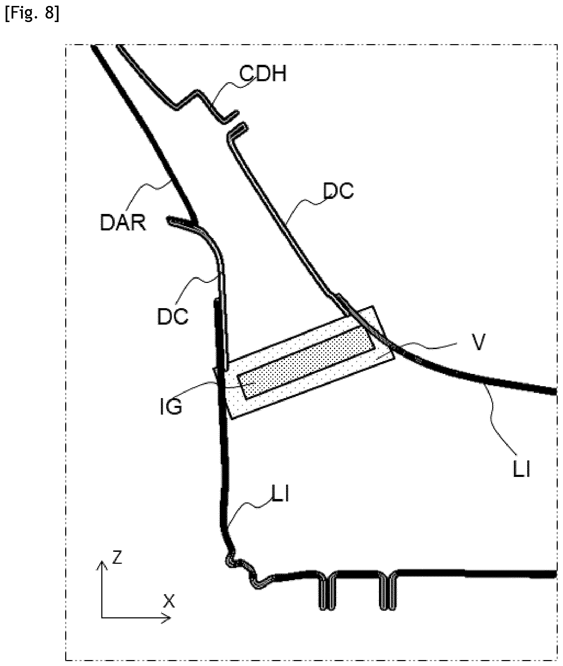

Les figures 5 à 8 montrent des sections du pied C avec l'insert gonflant IG qui est coloré en foncé pour sa partie rigide, et en clair pour le volume de gonflement de la matière gonflante de l'insert gonflant IG.

Concernant le dispositif de fermeture de longeronnet FL, il comprend une surface de scellage F recouvrant la patte d'agrafage PA (illustré en figure 2). La surface de scellage F est conservée sur la patte d'agrafage afin d'empêcher tout débordement de produit gonflant dans l'habitacle lors de l'expansion de l'insert gonflant IG afin de ne pas créer de problématique montage des ébénisteries.

## Revendications

1. Véhicule automobile dans un repère dans l'espace comprenant un axe avant-arrière (X) suivant une direction de déplacement du véhicule ; un axe latéral (Y) perpendiculaire à l'axe avant-arrière (X), et un axe vertical (Z) perpendiculaire à l'axe avant-arrière (X) et à l'axe latéral (Y), le véhicule automobile comportant une caisse qui comprend une doublure custode (DC) reposant sur un longeron interne (LI) d'un côté interne en référence à l'axe latéral (Y), le longeron interne (LI) comprenant une patte d'agrafage (PA) retenant la doublure custode (DC) sur le longeron interne (LI), la doublure custode (DC) et le longeron interne (LI) étant recouverts par une paroi d'habitacle (CDH) d'un côté externe en référence à l'axe latéral (Y),
la doublure custode (DC) et la paroi d'habitacle (CDH) délimitant un espace supérieur en référence à l'axe vertical (Z),
le longeron interne (LI) et la paroi d'habitacle (CDH) délimitant un espace inférieur en référence à l'axe vertical (Z),
l'espace supérieur et l'espace inférieur étant délimités par une doublure d'aile (DAR) d'un côté arrière en référence à l'axe avant-arrière (X),
**caractérisé en ce que** la caisse comprend en outre un insert gonflant (IG) s'étendant dans des interstices entre la paroi d'habitacle (CDH) et la doublure d'aile (DAR) d'un côté externe de l'espace supérieur en référence à l'axe latéral (Y), vers le longeron interne (LI) d'un côté interne de l'espace inférieur en référence à l'axe latéral (Y), de sorte à étanchéifier l'espace supérieur et l'espace inférieur en dessous de la patte d'agrafage (PA) en référence à l'axe vertical (Z).

2. Véhicule automobile selon la revendication 1, **caractérisé en ce que** la doublure d'aile (DAR) comprend au moins un trou de fixation (Ti) permettant de fixer l'insert gonflant (IG).

3. Véhicule automobile selon l'une quelconque des revendications 1 à 2, comprenant un dispositif de fermeture de longeronnet (FL) qui comprend une surface (F) fermant la patte d'agrafage (PA) d'un côté interne en référence à l'axe latéral (Y).

4. Véhicule automobile selon l'une quelconque des revendications 1 à 3, **caractérisé en ce que** l'insert gonflant (IG) comprend un noyau (N) non-extensible et une structure d'expansion (V) extensible, et **en ce que** le volume de la structure d'expansion (V) une fois étendue est supérieur au volume de l'espace supérieur, et à celui de l'espace inférieur.

5. Véhicule automobile selon la revendication 4, **caractérisé en ce que** le noyau (N) non-extensible occupe les interstices entre la paroi d'habitacle (CDH) et la doublure d'aile (DAR) dans l'espace supérieur, et la partie externe du longeron interne (LI) dans l'espace inférieur.

6. Procédé de fabrication d'un véhicule automobile selon l'une quelconque des revendications 1 à 5, comprenant les étapes suivantes :
- une étape montage de la doublure custode (DC) sur le longeron interne (LI) au moyen de la patte d'agrafage (PA) ;
- une étape de fixation de l'insert gonflant (IG) dans l'espace supérieur et l'espace inférieur ;
- une étape de montage de la paroi d'habitacle (CDH) d'un côté externe, et de la doublure d'aile (DAR) d'un côté arrière,
- une étape de gonflage de l'insert gonflant (IG) de sorte qu'il s'étende dans les interstices entre la paroi d'habitacle (CDH) et la doublure d'aile (DAR) d'un côté externe de l'espace supérieur, vers le longeron interne (LI) d'un côté interne de l'espace inférieur, et qu'il étanchéifie l'espace supérieur et l'espace inférieur.

7. Procédé de fabrication selon la revendication 6 combinée à la revendication 2, **caractérisé en ce que** l'étape de fixation comprend une fixation de l'insert gonflant (IG) dans ledit trou de fixation (Ti) de la doublure d'aile (DAR).

8. Procédé de fabrication selon l'une quelconque des revendications 6 à 7 combinée à la revendication 3, comprenant en outre une étape de mise en place du dispositif de fermeture de longeronnet (FL) de sorte que la surface (F) ferme la patte d'agrafage (PA) intérieurement.

9. Procédé de fabrication selon l'une quelconque des revendications 6 à 8 combinée à la revendication 4, **caractérisé en ce que** l'étape de fixation comprend une mise en place du noyau (N) non-extensible de sorte qu'il occupe les interstices entre la paroi d'habitacle (CDH) et la doublure d'aile (DAR) dans l'espace supérieur, et la partie externe du longeron interne (LI) dans l'espace inférieur.
